# EUROPÄISCHE PATENTSCHRIFT

(11) **EP 3 649 703 B1**
(45) Veröffentlichungstag und Bekanntmachung des Hinweises auf die Patenterteilung: **21.02.2024**
(21) Anmeldenummer: 18738278.3
(22) Anmeldetag: 04.07.2018
(51) Int. Cl.: B60L 53/302, B60L 53/16, B60L 53/18, H01R 13/00

(54) **LADEKABELSYSTEM MIT KÜHLUNG**
CHARGING CABLE SYSTEM WITH COOLING
SYSTÈME DE CÂBLE DE RECHARGE À REFROIDISSEMENT

(30) Priorität: 07.07.2017 DE 102017115241
(43) Veröffentlichungstag der Anmeldung: 13.05.2020
(73) Patentinhaber: PAXOS Consulting & Engineering GmbH & Co. KG, 40764 Langenfeld (DE)
(72) Erfinder: HAKENBERG, Peter, 42719 Solingen (DE)
(74) Vertreter: Lohmanns Lohmanns & Partner mbB
(86) Internationale Anmeldenummer: PCT/EP2018/068109
(87) Internationale Veröffentlichungsnummer: WO 2019/008047

(56) Entgegenhaltungen:
- WO-A1-2017/194361
- DE-A1-102010 007 975
- DE-A1-102015 112 347
- DE-A1-102015 114 133
- DE-A1-102016 108 823
- DE-B3-102010 050 562
- US-A1- 2010 089 669
- US-A1- 2017 096 073

## Beschreibung

Die Erfindung betrifft ein Ladekabelsystem gemäß dem Oberbegriff des Anspruch 1, aufweisend ein Ladekabel mit mehreren innerhalb des Ladekabels verlaufenden Einzelleitungen zur Übertragung eines Ladestroms und einem Kabelanschlussteil zum Anschluss des Ladekabels an den Energiespeicher eines elektrisch betreibbaren Fahrzeugs.

Aus dem Stand der Technik sind Ladestecker für elektrisch antreibbare Fahrzeuge bekannt, die zur Verbindung mit einer korrespondierenden Buchse ausgebildet sind. Beim Laden eines Energiespeichers eines Kraftfahrzeugs heizt sich der als Leistungssteckkontakt ausgebildete Ladestecker auf. Das Aufheizen des Stecckontaktes ist jedoch auf eine bestimmte Temperaturerhöhung zu begrenzen. Um eine solche begrenzte Temperaturerhöhung einzuhalten, können jedoch bei den größtenteils genormten Steckverbindergeometrien nur Ladeströme in einer Höhe verwendet werden, die kein schnelles Laden eines Fahrzeugs ermöglichen. Insbesondere bei einer intermittierenden Aufladung eines Energiespeichers sind über bestimmte Zeiträume höhere Ladeströme erforderlich, um den Energiespeicher in einer kurzen Zeit aufzuladen. Dies kann zu temporären Erhitzungen des Ladesteckers führen. Zur Lösung dieses Problems ist beispielsweise aus der DE 10 2015 100 347 A1 ein Elektroanschlusskörper bekannt, der einen Kühlfluidkanal zur Kühlung des Anschlusskörpers mit einem Kühlfluid aufweist. Doch hierdurch lässt sich eine Erhitzung des gesamten Ladekabels nicht verhindern.

Beispielsweise offenbart die DE 10 2010 050 562 B3 ein Ladekabel, in dem in einer gemeinsamen Ummantelung Stromkabel und Kühlkanäle zur Kühlung eines Steckers am Ladekabel geführt sind. Dabei führen Kühlkanäle durch das Kabel zum Stecker und im Stecker erfolgt eine Rückführung der Kühlkanäle zum Ladekabel.

Die DE 10 2015 112 347 A1 offenbart eine Ladestation mit einem Ladekabel, bei dem ein Kühlkanal ebenfalls zum Ladestecker hin und dann wieder zurück geführt ist. Die Rückführung des Kühlkanals erfolgt innerhalb des Steckers, wobei die inneren Enden von Kontaktstiften des Steckers in den Umkehrkanal ragen können, um dort vom Kühlmedium umströmt zu werden.

Die DE 10 2015 114 133 A1 offenbart ein Ladekabel mit einer Kühlung, bei dem in einem Kabelmantel mehrere Kühlkanäle zum Stecker und zurück in das Kabel geführt sind. Dabei sind um einen Einzelleiter herum mehrere Kühlkanäle angeordnet.

Die im Mitgliedstaat Deutschland ein älteres Recht bildende, nichtvorveröffentlichte DE 10 2016 108 823 A1 offenbart ein Ladesystem zum Aufladen eines elektrisch angetriebenen Fahrzeugs, bei dem ein Kühlmittel unter Umströmen der in einem Ladekabel geführten elektrischen Leitungen zurückgeführt wird.

Da die Akzeptanz und Verbreitung von Elektrofahrzeugen auch von der Ladezeit abhängt, besteht daher der Bedarf nach Ladesteckern und Ladekabeln, die ohne Erhöhung der genormten Abmessungen ein möglichst schnelles Laden ermöglichen. Aufgabe der Erfindung ist es daher, ein Ladekabelsystem bereitzustellen, das erhöhte Ladeströme bei einer begrenzten Aufheizung ermöglicht.

Erfindungsgemäß wird diese Aufgabe durch ein Ladekabelsystem gemäß dem unabhängigen Anspruch 1 gelöst.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Das erfindungsgemäße Ladekabelsystem weist ein Ladekabel mit mehreren innerhalb des Ladekabels verlaufenden Einzelleitungen zur Übertragung eines Ladestroms auf. Bei den Einzelleitungen handelt es sich um mehrere Leistungsleitungen für den Ladestrom, z.B. L1, L2, L3, eine Neutralleitung N und eine Schutzleitung PE. Ferner können in dem Ladekabel eine Pilotsignalleitung CP (control pilot) zur Übertragung von Pilotsignalen und eine sogenannte Plug-Present-Leitung (PP) vorhanden sein, mit deren Hilfe ein Elektrofahrzeug eine Ladestation anzeigen kann, ob ein Ladekabel mit einem Stecker eingesteckt ist oder nicht.

Das Ladekabel weist ferner ein Kabelanschlussteil zum Anschluss des Ladekabels an den Energiespeicher eines elektrisch betreibbaren Fahrzeugs auf. Dieser Anschluss erfolgt indirekt über mehrere Komponenten. Insbesondere ist dieses Kabelanschlussteil als Ladestecker bzw. Ladebuchse ausgebildet und kann temporär mit einem korrespondierenden Anschlusskörper an einem Elektrofahrzeug verbunden werden. Hierzu werden das Kabelanschlussteil und der Anschlusskörper des Elektrofahrzeugs typischerweise ineinandergesteckt, wodurch eine Verbindung zwischen den Leitungen des Ladekabels und den entsprechenden Leitungen des Fahrzeugs herstellbar ist. Innerhalb des Fahrzeugs führen dann Leitungen zum Energiespeicher des Fahrzeugs, d.h. zu einem oder mehreren Akkumulatoren und gegebenenfalls einem zugehörigen Batteriemanagementsystem (BMS). Diese Verbindung wird zur Erläuterung der vorliegenden Erfindung allgemein als Verbindungsleitung bezeichnet.

Erfindungsgemäß verläuft innerhalb des Ladekabels wenigstens ein Kühlkanal, in dem ein Kühlmedium zum Kabelanschlussteil geführt ist. Dieser Kühlkanal dient somit als Vorlauf für ein Kühlmedium, wobei der Kühlkanal beispielsweise durch einen Schlauch innerhalb des Ladekabels gebildet ist. Im Kabelanschlussteil sind ferner Ventilmittel zur Rückführung des Kühlmediums in das Ladekabel vorgesehen, wobei das Ladekabel so ausgeführt ist, dass das Kühlmedium nach dieser Rückführung die Einzelleitungen wenigstens teilweise umströmt. Auf diese Weise wird ein geschlossener Kreislauf für das Kühlmedium hergestellt, welches so das Ladekabel und das Kabelanschlussteil kühlen kann. Durch die Kühlung wird beim Ladevorgang die Temperaturerhöhung von Ladekabel und Kabelanschlussteil begrenzt, was vorteilhaft dazu führt, dass ohne eine Vergrößerung von genormten Abmessungen eines Kabelanschlussteils hohe Ladeströme und damit ein schnelles Laden möglich sind.

In einer Ausführungsform der Erfindung, welche für den Mitgliedstaat Deutschland erfindungsgemäß ist, sind wenigstens zwei der Einzelleitungen innerhalb des Ladekabels miteinander verdrillt bzw. verseelt. Insbesondere sind die Leitungen zur eigentlichen Ladeleistung miteinander verdrillt, während Leitungen zur Signalübertragung oder Steuerung nicht in die Verdrillung eingebunden sind. Durch die Verdrillung der Einzelleitungen wird das Ladekabel biegsamer, bei gleichem Kabelquerschnitt kann mehr Strom übertragen werden und die einzelnen Leitungen werden besser von dem Kühlmedium umspült und damit besser gekühlt. Das Kühlmedium umspült die verdrillten Einzelleitungen.

Um eine gute Kühlung der Einzelleitungen zu erreichen, kann deren jeweilige Isolierung ferner im Querschnitt konturiert ausgeführt sein. Beispielsweise kann eine Einzelleitung einen im Wesentlichen runden Querschnitt besitzen, der mit Längsrillen versehen ist. Durch diese Längsrillen strömt das Kühlmedium hindurch, wobei die Fläche zur Übertragung von Wärme auf das Kühlmedium erhöht ist und durch die Längsrillen eine gute Wärmeabfuhr durch Konvektion gewährleistet ist.

Dabei ist das Kühlmedium vorzugsweise elektrisch nichtleitend oder innerhalb des Ladekabels isoliert gegenüber Stromfluss, Als Kühlmedium können jegliche Fluide eingesetzt werden, die für eine Kühlung der Einzelleitungen des Kabels geeignet sind. Bei geeigneter Wahl des Kühlmediums kann dieses auch als Schmiermittel zwischen den Einzelleitungen diesen, wodurch die Einzelleitungen leichter aneinander abgleiten, wenn das Ladekabel gebogen wird. Als Kühlmedium können beispielsweise Druckluft, Wasser oder ein Öl verwendet werden. In einer Ausführungsform der Erfindung ist das Kühlmedium aus einer Gruppe der Fluide gewählt, deren Viskosität bei Erwärmung zunimmt. Bei zunehmender Erwärmung wird das Kühlmedium dann dünnflüssiger, was die Kühlung von warm werdenden Bereichen verbessert.

In einer Ausführungsform der Erfindung ist vorgesehen, dass die Ventilmittel des Kabelanschlussteils lediglich der Rückführung des Kühlmediums aus dem Zulaufschlauch zurück in das Ladekabel dienen. In einer anderen Ausführungsform ist jedoch vorgesehen, dass Kühlmedium bei Bedarf auch dem Elektrofahrzeug bereitgestellt werden kann, um innerhalb des Fahrzeugs Leitungen und insbesondere einen Energiespeicher zu kühlen. Die Ventilmittel des Kabelanschlussteils sind daher so ausgebildet, dass sie ein Kühlmedium wahlweise zurück in das Ladekabel oder zu einem Fahrzeug führen können. Zu einem Fahrzeug wird das Kühlmittel dann durch das Kabelanschlussteil und den korrespondierenden Anschlusskörper des Fahrzeugs geführt. Nach Durchlauf der entsprechenden Komponenten des Fahrzeugs wird das erwärmte Kühlmedium zurück durch den Anschlusskörper des Fahrzeugs in das Kabelanschlussteil und das Ladekabel geführt. Hierzu sind wenigstens im Kabelanschlussteil entsprechende Ventilmittel vorgesehen, aber auch der Anschlusskörper des Fahrzeugs kann hierfür Ventilmittel aufweisen.

Die Verbindung des Kühlkreislaufs des Ladekabels mit einem Fahrzeug ist insbesondere bei Schnellladung von Bedeutung. Doch auch wenn Fahrzeuge in der Sonne oder einer Tiefgarage stehen, kann der Einsatz der Fahrzeugkühlung vorteilhaft sein, da die Fahrzeuge in diesen Situationen zusätzliche Ladungswärme nicht nach außen abgeben können. Alternativ zu einer Kühlung des Fahrzeugs könnte die Ladesäule jedoch auch die Ladeleistung senken.

In einer Ausführungsform der Erfindung ist daher vorgesehen, dass das Kabelanschlussteil temporär an einen Anschlusskörper eines Fahrzeugs anschließbar ist, wobei dieser Anschlusskörper zur Übertragung eines Ladestroms über eine elektrische Verbindungsleitung mit dem Energiespeicher des Fahrzeugs verbunden ist. Bei dieser Ausführungsform wird das gesamte System aus Ladekabel, Kabelanschlussteil, Anschlusskörper des Fahrzeugs und Verbindungsleitung zum Energiespeicher des Fahrzeugs als Ladekabelsystem im Sinne der Erfindung angesehen. Die Ventilmittel des Kabelanschlussteils sind dann so ausgebildet, dass sie das Kühlmedium wahlweise zurück in das Ladekabel oder durch das Kabelanschlussteil in den Anschlusskörper des Fahrzeugs leiten können. Hierzu werden beispielsweise ein oder mehrere Kugelventile bzw. Doppel-Kugelventile verwendet. Der Anschlusskörper ist dann entsprechend so ausgebildet, dass er erwärmtes Kühlmedium von dem Fahrzeug durch den Anschlusskörper zurück in das Kabelanschlussteil führen kann.

Ob das Fahrzeug beim Laden über das Ladekabel mit einem Kühlmedium versorgt werden soll, entscheidet vorzugsweise eine Steuereinheit des Fahrzeugs. Weist das Fahrzeug beispielsweise keine Einrichtungen zur Kühlung von Energiespeichern auf, würden die Ventilmittel des Kabelanschlussteils das Kühlmedium standardmäßig nur durch das Kabelanschlussteil und zurück durch das Ladekabel führen. Hat ein Fahrzeug hingegen die Möglichkeit zu einer Kühlung, kann es diese bei Bedarf anfordern. Dies erfolgt über eine Steuereinheit des Fahrzeugs. In einer Ausführungsform der Erfindung sind die Ventilmittel des Kabelanschlussteils beispielsweise über eine Kommunikationsverbindung von einer Steuereinheit des Fahrzeugs ansteuerbar. Insbesondere sind die Ventilmittel des Kabelanschlussteils dabei über eine Schubstange ansteuerbar.

Fordert ein Fahrzeug eine Kühlung an, öffnet es zunächst Ventilmittel innerhalb seines Anschlusskörpers und zeitversetzt die Ventilmittel innerhalb des Kabelanschlussteils. Auf diese Weise wird der Kreislauf des Kühlmediums auf das Fahrzeug ausgeweitet. Vor dem Entkoppeln des Fahrzeugs von dem Ladekabel erfolgt dies in umgekehrter Reihenfolge. Das Fahrzeug schließt zunächst die Ventilmittel an seinem Anschlusskörper und verhindert ein weiteres Zuströmen von Kühlmedium in das Fahrzeug. Das sich dann im Fahrzeug befindende Kühlmedium wird vollständig durch das Ladekabel abgesaugt, bevor die Ventilmittel im Kabelanschlussteil ebenfalls geschlossen werden. So ist der Kreislauf des Kühlmediums wieder auf das Ladekabel beschränkt.

In einer zugehörigen Ladestation wird das Kühlmedium vorzugsweise im Kreislauf geführt und nach Durchlaufen des Ladekabels selbst gekühlt. Hierzu kann an der Ladestation ein Kühlaggregat eingesetzt werden. Möglich wäre auch die Kühlung über einen Wärmetauscher mit der Außenluft. Nach dem Laden eines Fahrzeugs kann das Ladekabel mit Druckluft gespült werden, um Kühlmedium aus dem Ladekabel zu entfernen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine schematische Frontansicht der Anschlussseite eines Ladesteckers;
- Fig. 2: eine schematische Darstellung einer Ausführungsform eines erfindungsgemäßen Ladekabelsystems ohne Kühlung eines angeschlossenen Fahrzeugs; und
- Fig. 3: das Ladekabelsystem gemäß Fig. 2 mit Kühlung eines angeschlossenen Fahrzeugs.

Das erfindungsgemäße Ladekabelsystem weist ein Ladekabel auf, welches an einer Ladestation für elektrisch betreibbare Fahrzeuge angebracht ist. Die Ladestation steht in Verbindung mit einer Energiequelle, von der über das Ladekabel Strom an ein Fahrzeug übertragbar ist. Hierzu wird das Ladekabel temporär an das Fahrzeug angeschlossen, was über eine geeignete Stecker-Buchse-Verbindung erfolgt. Beispielsweise ist am Ladekabel ein Kabelanschlussteil ausgebildet, welches mit einem Anschlusskörper des Fahrzeugs verbindbar ist. Das Kabelanschlussteil wird im Folgenden als Ladestecker bezeichnet, während der Anschlusskörper des Fahrzeugs als Ladebuchse bezeichnet wird. Die Anschlussteile können jedoch auch umgekehrt ausgeformt sein, so dass das Kabelanschlussteil als Ladebuchse ausgeformt ist, während der Anschlusskörper des Fahrzeugs ein Ladestecker ist.

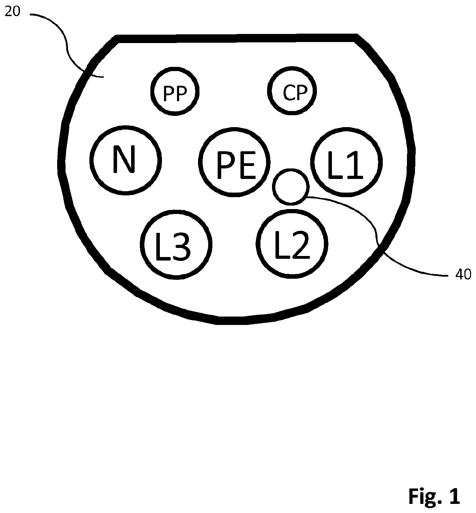

Fig. 1 zeigt eine Frontansicht eines solchen Kabelanschlussteils 20, auf dessen Anschlussseite Kontakte für verschiedene Einzelleitungen ausgebildet sind. Der zu verbindende Anschlusskörper des Fahrzeugs weist korrespondierende Kontakte auf, die bei Verbindung der beiden Komponenten in elektrischen Kontakt gebracht werden. In der Ausführungsform der Fig. 1 sind beispielsweise mehrere Leistungsleitungen für den Ladestrom L1, L2, L3, eine Neutralleitung N und eine Schutzleitung PE vorgesehen. Ferner sind in dem Ladekabel eine Pilotsignalleitung CP (control pilot) zur Übertragung von Pilotsignalen und eine sogenannte Plug-Present-Leitung (PP) vorhanden sein, mit deren Hilfe ein Elektrofahrzeug eine Ladestation anzeigen kann, ob ein Ladekabel mit einem Stecker eingesteckt ist oder nicht.

Vorzugsweise sind wenigstens die Leistungsleitungen L1, L2, L3 innerhalb des Ladekabels verdrillt. Die Kontakte dieser Einzelleitungen liegen jedoch beispielsweise wie dargestellt an der Anschlussseite des Kabelanschlussteils 20, da diese Anordnung und die Abmessungen genormt sind. Zwischen den Kontakten der Einzelleitungen liegt das offene Ende eines Kühlkanals 40, der innerhalb des Ladekabels beispielsweise als Schlauch ausgebildet ist.

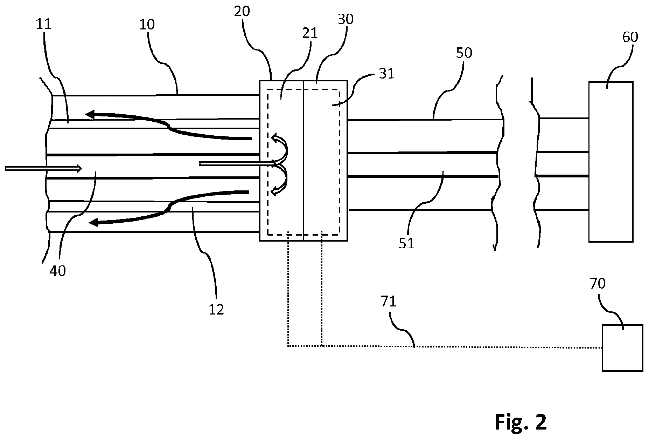

Fig. 2 zeigt eine schematische Darstellung eines Ladekabels 10 mit einem Ladestecker 20. Innerhalb des Ladekabels 10 sind exemplarisch zwei Einzelleitungen 11 und 12 dargestellt, die bis zu dem Ladestecker 20 verlaufen. Zwischen diesen Einzelleitungen 11, 12 liegt ein Kühlkanal 40, der ebenfalls bis zum Ladestecker 20 verläuft und in diesen mündet. Durch diesen Kühlkanal 40 ist ein Kühlmedium bis zum Ladestecker 20 führbar, wobei diese Vorlaufrichtung mit einem weißen Pfeil gekennzeichnet ist.

Der Ladestecker 20 ist an eine Ladebuchse 30 eines Fahrzeugs angeschlossen. Diese Verbindung ist in Fig. 2 lediglich schematisch dargestellt und kann auf bekannte Art verwirklicht werden. Von der Ladebuchse 30 des Fahrzeugs führt eine Verbindungsleitung 50 zu einem Energiespeicher 60 des Fahrzeugs. Das Leiten von Ladestrom von der Ladebuchse 30 zum Energiespeicher 60 kann ebenfalls durch mehrere Einzelleitungen erfolgen (nicht dargestellt). Ferner können ebenfalls nicht dargestellte Komponenten wie ein Batteriemanagementsystem (BMS) zwischengeschaltet sein.

Beim Laden des Energiespeichers 60 des Fahrzeugs wird Kühlmedium durch den Kühlkanal 40 zum Ladestecker 20 geführt und bei einer ersten Betriebsart durch Ventilmittel 21 des Ladesteckers 20 in das Ladekabel 10 zurückgeführt. Diese Rückführung ist in Fig. 2 durch gebogene Pfeile dargestellt. Je nach Ventilart verläuft der Strom des Kühlmediums entsprechend innerhalb der Ventilmittel 21. Zur Ladebuchse 30 hin ist der Ladestecker 20 bei dieser Betriebsart geschlossen, so dass das Kühlmedium nur innerhalb des Ladekabels 10 und der Ladestation im Kreislauf geführt wird, wobei es den Ladestecker 20 und das Ladekabel 10 kühlt. Dabei strömt das Kühlmedium nach der Rückführung im Ladestecker 20 um die Einzelleitungen 11, 12 herum, was in Fig. 2 durch mehrere geschwungene Pfeile dargestellt ist. Das Kühlmedium umströmt die Einzelleitungen 11, 12, wozu zwischen den Einzelleitungen 11, 12 ausreichend Raum vorhanden ist.

Die Ventilmittel 31 der Ladebuchse 30 des Fahrzeugs stehen vorzugsweise über eine Kommunikationsverbindung 71 in Verbindung mit einer Steuereinheit 70 des Fahrzeugs. Über diese Steuereinheit 70 kann das Fahrzeug bei Bedarf die Ventilmittel 31 öffnen und schließen. Dabei steht die Steuereinheit über die Kommunikationsverbindung 71 auch in Verbindung mit den Ventilmitteln 21 des Ladesteckers 20 bzw. mit mechanischen Mitteln, mit denen die Ventilmittel 21 angesteuert werden können. Hierbei kann es sich beispielsweise um eine Schubstange handeln.

Verfügt das Fahrzeug über Mittel zur Kühlung des Energiespeichers 60 oder anderer Komponenten eines Batteriesystems, kann an der Ladebuchse 30 eine Kühlzuleitung 51 vorgesehen sein. Diese Kühlzuleitung 51 kann im Bereich der Verbindungsleitung 50 verlaufen, sie kann aber auch innerhalb des Fahrzeugs von der Ladebuchse 30 abzweigen. In jedem Fall führt die Kühlzuleitung 51 zum Energiespeicher 60 oder einer anderen Komponente des Fahrzeugs und kann zur Zuleitung von Kühlmedium eingesetzt werden. Die Kühlzuleitung 51 kann hierzu durch eine entsprechende Ausformung der Ventilmittel 31 und 21 mit dem Kühlkanal 40 des Ladekabels 10 verbunden werden.

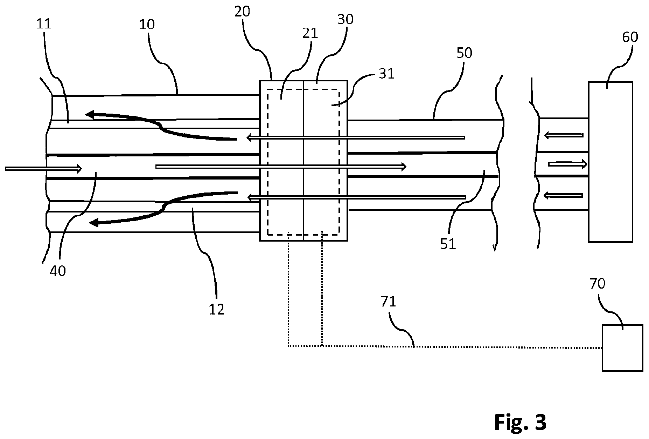

Hat das Fahrzeug Bedarf für eine Kühlung, steuert es über die Steuereinheit 70 die Ventilmittel 21 und 31 so an, dass das Kühlmedium aus dem Kühlkanal 40 des Ladekabels 20 nicht innerhalb des Ladesteckers 20 zurückgeführt wird, sondern in die Kühlzuleitung 51 fließt. Vorzugsweise werden hierfür zunächst die Ventilmittel 31 der Ladebuchse 30 des Fahrzeugs geöffnet und zeitversetzt die Ventilmittel 21 des Ladesteckers 20 des Ladekabels 10 angesteuert. Fig. 3 zeigt diese Betriebsart, indem der Vorlauf des Kühlmediums durch Ladestecker 20 und Ladebuchse 30 mit einem durchgehenden weißen Pfeil gekennzeichnet ist. Nach Kühlung beispielsweise des Energiespeichers 60 wird das erwärmte Kühlmedium (schwarze Pfeile) durch die Verbindungsleitung 50 zurück zu Ladebuchse 30 und Ladestecker 20 geführt. Die Ventilmittel 21 und 31 sind entsprechend so angesteuert, dass das erwärmte Kühlmedium hindurchtreten und durch das Ladekabel 10 zur Ladestation geführt wird. Dabei umströmt es die Einzelleitungen 11, 12 wie in der Betriebsart der Fig. 2. An der Ladestation wird das erwärmte Kühlmedium gekühlt und kann erneut dem Kühlkanal zugeführt werden.

Am Ende des Ladevorgangs verschließt die Steuereinheit 70 durch die Ventilmittel 31 den Zulauf zur Kühlzuleitung 51, so dass kein weiteres Kühlmedium in Richtung Energiespeicher 60 strömen kann. Ist das verbleibende Kühlmedium vollständig zurück in das Ladekabel 10 gesaugt, wird auch dieser Rücklauf im Ventilmittel 31 geschlossen. Anschließend wird auch das Ventilmittel 21 des Ladesteckers 20 so angesteuert, dass bei einem Abziehen des Ladesteckers 20 von der Ladebuchse 30 kein Kühlmedium aus dem Ladestecker 20 austreten kann.

### Bezugszeichenliste:

- 10: Ladekabel
- 11,12: Einzelleitung
- 13,14: Konturierung, Längsrille
- 20: Kabelanschlussteil, Ladestecker
- 21: Ventilmittel
- 30: Anschlusskörper, Ladebuchse
- 31: Ventilmittel
- 40: Kühlkanal, Schlauch
- 50: Verbindungsleitung
- 51: Kühlzuleitung
- 60: Energiespeicher
- 70: Steuereinheit
- 71: Kommunikationsverbindung

## Patentansprüche (Patentansprüche für folgende(n) Vertragsstaat(en): AL, AT, BE, BG, CH/LI, CY, CZ, DK, EE, ES, FI, FR, GB, GR, HR HU, IE, ES, IT, LT, LU, LV, MC, MK, MT, NL, NO, PL, PT, RO, RS, SE, SI,, SK, SM, TR)

1. Ladekabelsystem, aufweisend ein Ladekabel (10) mit mehreren innerhalb des Ladekabels (10) verlaufenden Einzelleitungen (11;12) zur Übertragung eines Ladestroms und einem Kabelanschlussteil (20) zum Anschluss des Ladekabels (10) an den Energiespeicher (50) eines elektrisch betreibbaren Fahrzeugs, wobei innerhalb des Ladekabels (10) wenigstens ein Kühlkanal (40) verläuft, in dem ein Kühlmedium zum Kabelanschlussteil (20) geführt ist,
**dadurch gekennzeichnet, dass** im Kabelanschlussteil (20) Ventilmittel (21) zur Rückführung des Kühlmediums in das Ladekabel (10) vorgesehen sind, wobei das Ladekabel (20) so ausgeführt ist, dass das Kühlmedium nach dieser Rückführung die Einzelleitungen (11;12) umströmt.

2. Ladekabelsystem nach Anspruch 1,
**dadurch gekennzeichnet, dass** die Einzelleitungen (11;12) innerhalb des Ladekabels (10) verdrillt sind.

3. Ladekabelsystem nach einem oder beiden der Ansprüche 1 und 2,
**dadurch gekennzeichnet, dass** das Kühlmedium elektrisch nichtleitend ist.

4. Ladekabelsystem nach einem oder mehreren der Ansprüche 1 bis 3,
**dadurch gekennzeichnet, dass** eine jeweilige Isolierung der Einzelleitungen (11;12) konturiert ausgeführt ist.

5. Ladekabelsystem nach Anspruch 4,
**dadurch gekennzeichnet, dass** eine jeweilige Isolierung der Einzelleitungen (11;12) mit Längsrillen (13;14) versehen ist.

6. Ladekabelsystem nach einem oder mehreren der Ansprüche 1 bis 5,
**dadurch gekennzeichnet, dass** das Kühlmedium aus einer Gruppe der Fluide gewählt ist, deren Viskosität bei Erwärmung zunimmt.

7. Ladekabelsystem nach einem oder mehreren der Ansprüche 1 bis 6,
**dadurch gekennzeichnet, dass** das Kabelanschlussteil (20) temporär an einen Anschlusskörper (30) eines Fahrzeugs anschließbar ist, wobei dieser Anschlusskörper (30) zur Übertragung eines Ladestroms über eine elektrische Verbindungsleitung (50) mit dem Energiespeicher (60) des Fahrzeugs verbunden ist, und die Ventilmittel (21) des Kabelanschlussteils (20) so ausgebildet sind, dass sie das Kühlmedium wahlweise zurück in das Ladekabei (10) oder durch das Kabelanschlussteil (20) in den Anschlusskörper (30) des Fahrzeugs leiten.

8. Ladekabelsystem nach Anspruch 7,
**dadurch gekennzeichnet, dass** der Anschlusskörper (30) ausgebildet ist, erwärmtes Kühlmedium von dem Fahrzeug durch den Anschlusskörper (30) in das Kabelanschlussteil (20) zu führen.

9. Ladekabelsystem nach einem oder mehreren der Ansprüche 1 bis 8,
**dadurch gekennzeichnet, dass** die Ventilmittel (21) des Kabelanschlussteils (20) über eine Kommunikationsverbindung (71) von einer Steuereinheit (70) des Fahrzeugs ansteuerbar sind.

10. Ladekabelsystem nach Anspruch 9,
**dadurch gekennzeichnet, dass** die Ventilmittel (21) des Kabelanschlussteils (20) über eine Schubstange ansteuerbar sind.

## Patentansprüche (Patentansprüche für folgende(n) Vertragsstaat(en): DE)

1. Ladekabelsystem, aufweisend ein Ladekabel (10) mit mehreren innerhalb des Ladekabels (10) verlaufenden Einzelleitungen (11;12) zur Übertragung eines Ladestroms und einem Kabelanschlussteil (20) zum Anschluss des Ladekabels (10) an den Energiespeicher (50) eines elektrisch betreibbaren Fahrzeugs, wobei innerhalb des Ladekabels (10) wenigstens ein Kühlkanal (40) verläuft, in dem ein Kühlmedium zum Kabelanschlussteil (20) geführt ist, und das Ladekabel (20) so ausgeführt ist, dass das Kühlmedium nach einer Rückführung die im Ladekabel (10) verlaufenden Einzelleitungen (11;12) umströmt,
**dadurch gekennzeichnet, dass** im Kabelanschlussteil (20) Ventilmittel (21) zur Rückführung des Kühlmediums in das Ladekabel (10) vorgesehen sind und die Einzelleitungen (11;12) innerhalb des Ladekabels (10) verdrillt sind.

2. Ladekabelsystem nach Anspruch 1,
**dadurch gekennzeichnet, dass** das Kühlmedium elektrisch nichtleitend ist.

3. Ladekabelsystem nach einem oder mehreren der Ansprüche 1 und 2,
**dadurch gekennzeichnet, dass** eine jeweilige Isolierung der Einzelleitungen (11;12) konturiert ausgeführt ist.

4. Ladekabelsystem nach Anspruch 3,
**dadurch gekennzeichnet, dass** eine jeweilige Isolierung der Einzelleitungen (11;12) mit Längsrillen (13;14) versehen ist.

5. Ladekabelsystem nach einem oder mehreren der Ansprüche 1 bis 4,
**dadurch gekennzeichnet, dass** das Kühlmedium aus einer Gruppe der Fluide gewählt ist, deren Viskosität bei Erwärmung zunimmt.

6. Ladekabelsystem nach einem oder mehreren der Ansprüche 1 bis 5,
**dadurch gekennzeichnet, dass** das Kabelanschlussteil (20) temporär an einen Anschlusskörper (30) eines Fahrzeugs anschließbar ist, wobei dieser Anschlusskörper (30) zur Übertragung eines Ladestroms über eine elektrische Verbindungsleitung (50) mit dem Energiespeicher (60) des Fahrzeugs verbunden ist, und die Ventilmittel (21) des Kabelanschlussteils (20) so ausgebildet sind, dass sie das Kühlmedium wahlweise zurück in das Ladekabei (10) oder durch das Kabelanschlussteil (20) in den Anschlusskörper (30) des Fahrzeugs leiten.

7. Ladekabelsystem nach Anspruch 6,
**dadurch gekennzeichnet, dass** der Anschlusskörper (30) ausgebildet ist, erwärmtes Kühlmedium von dem Fahrzeug durch den Anschlusskörper (30) in das Kabelanschlussteil (20) zu führen.

8. Ladekabelsystem nach einem oder mehreren der Ansprüche 1 bis 7,
**dadurch gekennzeichnet, dass** die Ventilmittel (21) des Kabelanschlussteils (20) über eine Kommunikationsverbindung (71) von einer Steuereinheit (70) des Fahrzeugs ansteuerbar sind.

9. Ladekabelsystem nach Anspruch 8,
**dadurch gekennzeichnet, dass** die Ventilmittel (21) des Kabelanschlussteils (20) über eine Schubstange ansteuerbar sind.

## Claims (Claims for the following Contracting State(s): DE)

1. Charging cable system, having a charging cable (10) with multiple single lines (11; 12) running inside the charging cable (10) for transferring a charging current and with a cable connecting part (20) for connecting the charging cable (10) to the energy store (50) of an electrically operable vehicle, wherein there runs inside the charging cable (10) at least one cooling duct (40) in which a cooling medium is carried to the cable connecting part (20), and the charging cable (20) is embodied such that the cooling medium flows around the single lines (11; 12) running in the charging cable (10) after it has returned,
**characterized in that** there is provision in the cable connecting part (20) for valve means (21) for returning the cooling medium to the charging cable (10) and the single lines (11; 12) are twisted inside the charging cable (10).

2. Charging cable system according to Claim 1,
**characterized in that** the cooling medium is electrically nonconductive.

3. Charging cable system according to one or more of Claims 1 and 2,
**characterized in that** a respective insulation of the single lines (11; 12) is embodied in contoured fashion.

4. Charging cable system according to Claim 3,
**characterized in that** a respective insulation of the single lines (11; 12) is provided with longitudinal grooves (13:14).

5. Charging cable system according to one or more of Claims 1 to 4,
**characterized in that** the cooling medium is chosen from a group of fluids whose viscosity increases when heated.

6. Charging cable system according to one or more of Claims 1 to 5,
**characterized in that** the cable connecting part (20) is temporarily connectable to a connecting body (30) of a vehicle, wherein this connecting body (30) is connected to the energy store (60) of the vehicle for the purpose of transferring a charging current via an electrical connecting line (50), and the valve means (21) of the cable connecting part (20) are in a form such that they route the cooling medium either back to the charging cable (10) or through the cable connecting part (20) to the connecting body (30) of the vehicle,

7. Charging cable system according to Claim 6,
**characterized in that** the connecting body (30) is designed to carry heated cooling medium from the vehicle through the connecting body (30) to the cable connecting part (20).

8. Charging cable system according to one or more of Claims 1 to 7,
**characterized in that** the valve means (21) of the cable connecting part (20) are actuatable by a control unit (70) of the vehicle via a communication connection (71).

9. Charging cable system according to Claim 8,
**characterized in that** the valve means (21) of the cable connecting part (20) are actuatable via a push rod.

## Claims (Claims for the following Contracting State(s): AL, AT, BE, BG, CH/LI, CY, CZ, DK, EE, ES, FI, FR, GB, GR, HR HU, IE, ES, IT, LT, LU, LV, MC, MK, MT, NL, NO, PL, PT, RO, RS, SE, SI,, SK, SM, TR)

1. Charging cable system, having a charging cable (10) with multiple single lines (11; 12) running inside the charging cable (10) for transferring a charging current and with a cable connecting part (20) for connecting the charging cable (10) to the energy store (50) of an electrically operable vehicle, wherein there runs inside the charging cable (10) at least one cooling duct (40) in which a cooling medium is carried to the cable connecting part (20),
**characterized in that** there is provision in the cable connecting part (20) for valve means (21) for returning the cooling medium to the charging cable (10), wherein the charging cable (20) is embodied such that the cooling medium flows around the single lines (11; 12) running in the charging cable (10) after this return.

2. Charging cable system according to Claim 1,
**characterized in that** the single lines (11; 12) are twisted inside the charging cable (10).

3. Charging cable system according to one or both of Claims 1 and 2,
**characterized in that** the cooling medium is electrically nonconductive.

4. Charging cable system according to one or more of Claims 1 to 3,
**characterized in that** a respective insulation of the single lines (11; 12) is embodied in contoured fashion.

5. Charging cable system according to Claim 4,
**characterized in that** a respective insulation of the single lines (11; 12) is provided with longitudinal grooves (13;14).

6. Charging cable system according to one or more of Claims 1 to 5,
**characterized in that** the cooling medium is chosen from a group of fluids whose viscosity increases when heated.

7. Charging cable system according to one or more of Claims 1 to 6,
**characterized in that** the cable connecting part (20) is temporarily connectable to a connecting body (30) of a vehicle, wherein this connecting body (30) is connected to the energy store (60) of the vehicle for the purpose of transferring a charging current via an electrical connecting line (50), and the valve means (21) of the cable connecting part (20) are in a form such that they route the cooling medium either back to the charging cable (10) or through the cable connecting part (20) to the connecting body (30) of the vehicle.

8. Charging cable system according to Claim 7,
**characterized in that** the connecting body (30) is designed to carry heated cooling medium from the vehicle through the connecting body (30) to the cable connecting part (20).

9. Charging cable system according to one or more of Claims 1 to 8,
**characterized in that** the valve means (21) of the cable connecting part (20) are actuatable by a control unit (70) of the vehicle via a communication connection (71).

10. Charging cable system according to Claim 9, **characterized in that** the valve means (21) of the cable connecting part (20) are actuatable via a push rod.

## Revendications (Revendications pour l'(les) Etat(s) contractant(s) suivant(s): DE)

1. Système de câble de recharge, comprenant un câble de recharge (10) ayant, à l'intérieur de lui, plusieurs conducteurs individuels (11 ; 12) pour la transmission d'un courant de recharge et ayant une pièce (20) de connexion de câble pour la connexion du câble de recharge (10) à l'accumulateur d'énergie (50) d'un véhicule électrique, au moins un canal de refroidissement (40) s'étendant à l'intérieur du câble de recharge (10), dans lequel un fluide de refroidissement est guidé vers la pièce (20) de connexion de câble, et le câble de recharge (20) étant réalisé de telle sorte que le fluide de refroidissement, après un retour, s'écoule autour des conducteurs individuels (11 ;12) s'étendant dans le câble de recharge (10),
**caractérisé en ce que** des moyens (21) formant vanne sont prévus dans la pièce (20) de connexion de câble pour le retour du fluide de refroidissement dans le câble de recharge (10) et les conducteurs individuels (11 ; 12) sont torsadés à l'intérieur du câble de recharge (10).

2. Système de câble de recharge selon la revendication 1,
**caractérisé en ce que** le fluide de refroidissement est électriquement non conducteur.

3. Système de câble de recharge selon une ou plusieurs des revendications 1 et 2,
**caractérisé en ce que** chaque isolation des conducteurs individuels (11 ; 12) est conçue de façon à être profilée.

4. Système de câble de recharge selon la revendication 3,
**caractérisé en ce que** chaque isolation des conducteurs individuels (11 ; 12) est pourvue de rainures longitudinales (13 ; 14).

5. Système de câble de recharge selon une ou plusieurs des revendications 1 à 4,
**caractérisé en ce que** le fluide de refroidissement est choisi dans un groupe de fluides dont la viscosité augmente lorsqu'il est chauffé.

6. Système de câble de recharge selon une ou plusieurs des revendications 1 à 5,
**caractérisé en ce que** la pièce (20) de connexion de câble est apte à être raccordée temporairement à un corps de connexion (30) d'un véhicule, ce corps de connexion (30) étant relié à l'accumulateur d'énergie (60) du véhicule par l'intermédiaire d'une ligne de connexion électrique (50) pour la transmission d'un courant de recharge, et les moyens (21) formant vanne de la pièce (20) de connexion de câble sont conçus de manière à diriger le fluide de refroidissement, au choix, en retour dans le câble de recharge (10) ou à travers la pièce (20) de connexion de câble dans le corps de connexion (30) du véhicule.

7. Système de câble de recharge selon la revendication 6,
**caractérisé en ce que** le corps de connexion (30) est adapté pour guider le fluide de refroidissement chauffé du véhicule à travers le corps de connexion (30) dans la pièce (20) de connexion de câble.

8. Système de câble de recharge selon une ou plusieurs des revendications 1 à 7,
**caractérisé en ce que** les moyens (21) formant vanne de la pièce (20) de connexion de câble sont aptes à être commandés par une unité de commande (70) du véhicule via une liaison de communication (71).

9. Système de câble de recharge selon la revendication 8,
**caractérisé en ce que** les moyens (21) formant vanne de la pièce (20) de connexion de câble sont aptes à être commandés par une tige de poussée.

## Revendications (Revendications pour l'(les) Etat(s) contractant(s) suivant(s): AL, AT, BE, BG, CH/LI, CY, CZ, DK, EE, ES, FI, FR, GB, GR, HR HU, IE, ES, IT, LT, LU, LV, MC, MK, MT, NL, NO, PL, PT, RO, RS, SE, SI,, SK, SM, TR)

1. Système de câble de recharge, comprenant un câble de recharge (10) ayant, à l'intérieur de lui, plusieurs conducteurs individuels (11 ; 12) pour la transmission d'un courant de recharge et ayant une pièce (20) de connexion de câble pour la connexion du câble de recharge (10) à l'accumulateur d'énergie (50) d'un véhicule électrique, au moins un canal de refroidissement (40) s'étendant à l'intérieur du câble de recharge (10), dans lequel un fluide de refroidissement est guidé vers la pièce (20) de connexion de câble,
**caractérisé en ce que** des moyens (21) formant vanne sont prévus dans la pièce (20) de connexion de câble pour le retour du fluide de refroidissement dans le câble de recharge (10), le câble de recharge (20) étant réalisé de telle sorte que le fluide de refroidissement, après ce retour, s'écoule dans les conducteurs individuels (11 ;12).

2. Système de câble de recharge selon la revendication 1,
**caractérisé en ce que** les conducteurs individuels (11 ; 12) sont torsadés à l'intérieur du câble de recharge (10).

3. Système de câble de recharge selon une ou plusieurs des revendications 1 et 2,
**caractérisé en ce que** le fluide de refroidissement est électriquement non conducteur.

4. Système de câble de recharge selon une ou plusieurs des revendications 1 à 3,
**caractérisé en ce que** chaque isolation des conducteurs individuels (11 ; 12) est conçue de façon à être profilée.

5. Système de câble de recharge selon la revendication 4,
**caractérisé en ce que** chaque isolation des conducteurs individuels (11 ; 12) est pourvue de rainures longitudinales (13 ; 14).

6. Système de câble de recharge selon une ou plusieurs des revendications 1 à 5,
**caractérisé en ce que** le fluide de refroidissement est choisi dans un groupe de fluides dont la viscosité augmente lorsqu'il est chauffé.

7. Système de câble de recharge selon une ou plusieurs des revendications 1 à 6, **caractérisé en ce que** la pièce (20) de connexion de câble est apte à être raccordée temporairement à un corps de connexion (30) d'un véhicule, ce corps de connexion (30) étant relié à l'accumulateur d'énergie (60) du véhicule par l'intermédiaire d'une ligne de connexion électrique (50) pour la transmission d'un courant de recharge, et les moyens (21) formant vanne de la pièce (20) de connexion de câble sont conçus de manière à diriger le fluide de refroidissement, au choix, en retour dans le câble de recharge (10) ou à travers la pièce (20) de connexion de câble dans le corps de connexion (30) du véhicule.

8. Système de câble de recharge selon la revendication 7,
**caractérisé en ce que** le corps de connexion (30) est adapté pour guider le fluide de refroidissement chauffé du véhicule à travers le corps de connexion (30) dans la pièce (20) de connexion de câble.

9. Système de câble de recharge selon une ou plusieurs des revendications 1 à 8,
**caractérisé en ce que** les moyens (21) formant vanne de la pièce (20) de connexion de câble sont aptes à être commandés par une unité de commande (70) du véhicule via une liaison de communication (71).

10. Système de câble de recharge selon la revendication 9,
**caractérisé en ce que** les moyens (21) formant vanne de la pièce (20) de connexion de câble sont aptes à être commandés par une tige de poussée.
